# EUROPÄISCHE PATENTANMELDUNG

(11) **EP 4 593 218 A1**
(43) Veröffentlichungstag der Anmeldung: **30.07.2025**
(21) Anmeldenummer: 24154305.7
(22) Anmeldetag: 29.01.2024
(51) Int. Cl.: H01R 43/052, H01R 43/28

(54) **ALS SCHWENKMASCHINE AUSGEFÜHRTE ANLAGE ZUM KONFEKTIONIEREN VON KABELN**

(71) Anmelder: komax Holding AG, 6036 Dierikon (CH)
(72) Erfinder: Viviroli, Stefan, 6048 Horw (CH); Conte, Alois, 6030 Ebikon (CH)
(74) Vertreter: Inventio AG

(57) **Zusammenfassung**

Eine Anlage (1) zum Konfektionieren von Kabeln umfasst zwei Schwenkeinheiten (5, 6) und einer Bearbeitungsstation (21, 22) zum Bearbeiten von Kabelenden des Kabels, einen Schlaufenleger (7) zum Bilden von Kabelschlaufen (3) aus dem Kabel (2), einen Schlaufenstrecker (8) und einen durch einen Greifer (20) gebildeten Schlaufenhalter (9) zum Sichern der Kabelschlaufe (3) umfasst. Der Schlaufenleger (7) und die zweite Schwenkeinheit (6) sind derart ausgeführt, dass die fertig konfektionierte Kabelschlaufe (3) mittels der jeweiligen Kabelgreifer (15, 19) auf die Kabelablage (10) legbar ist. Die Kabelablage (10) als Förderband ausgeführte Kabelablage (10) umfasst Halteelemente (30, 31) zzum Halten beider Kabelenden der Kabelschlaufe (3).

## Beschreibung

Die Erfindung betrifft eine Anlage zum Konfektionieren von Kabeln gemäss dem Oberbegriff von Anspruch 1.

Bei der Konfektionierung von Kabeln werden Kabelenden der Kabel bearbeitet. Ein solcher Bearbeitungsschritt ist zum Beispiel das Crimpen. Unter "Crimpen" versteht man die Herstellung einer nicht lösbaren elektrischen und mechanischen Verbindung (Crimpverbindung) durch plastische Deformation zwischen einem Leiter und einem Crimpkontakt. Für höhere Anforderung hinsichtlich Dichtheit können die absiolierten Kabelenden vor dem Crimpen in Tüllenstationen mit Tüllen bestückt werden.

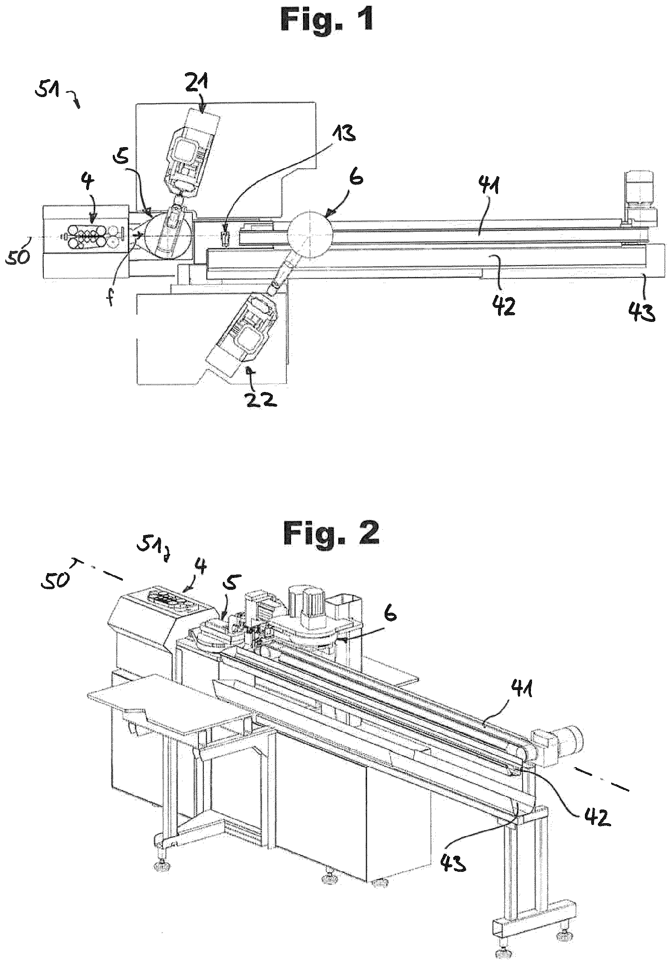

Eine gattungsmässig vergleichbare Anlage ist aus der EP 1 447 888 A1 bekannt geworden. Die EP 1 447 888 A1 zeigt eine Kabelbearbeitungseinrichtung mit einer Abisoliereinheit und zwei Crimpstationen mit Crimppressen. Die Vorrichtung verfügt weiter über einen als Bandantrieb ausgebildeten Kabelvorschub zum Bewegen des Kabels entlang einer Maschinenlängsachse. Die Abisoliereinheit zum Ablängen und Abisolieren der Kabelenden ist auf der Maschinenlängsachse angeordnet. Da sich die beiden Crimppressstationen jedoch neben der Maschinenlängsachse befinden, muss das Kabel mittels mit Greifern versehenen Schwenkarmen von Schwenkeinheiten zu den jeweiligen Crimppressen der Crimpstationen geführt werden, weshalb dieser Typ von Kabelbearbeitungseinrichtungen dem Fachmann auch unter der Bezeichnung "Schwenkmaschinen" bekannt und geläufig ist. Eine als Schwenkmaschine ausgeführte Anlage zum Konfektionieren von Kabeln ist in den Figuren 1 und 2 gezeigt.

Um bei langen Kabeln Platz zu sparen, kann das Kabel zu einer Kabelschlaufe geformt werden. Es ist aber auch denkbar, dass zur weiteren Verarbeitung konfektionierte Kabel als Kabelschlaufen vorliegen sollen. Die US 5,740,608 A zeigt eine Schwenkmaschine, die während der Bearbeitung mit den Kabeln Schlaufen bildet und die Kabelschlaufen durch ein mit Nocken bestückten Transportband einzeln an das Maschinenende bewegt, um die Kabelschlaufen dort in einen Entnahmebehälter fallen zu lassen. Diese Schwenkmaschine erreicht zwar eine Verkürzung der Maschine, sie hat neben anderen auch den Nachteil, dass nur ein Los für die Entnahme bereitgestellt wird.

Es ist deshalb eine Aufgabe der vorliegenden Erfindung, die Nachteile des Bekannten zu vermeiden und insbesondere eine Anlage zum Konfektionieren von Kabeln zu schaffen, die effizient und sicher betrieben werden kann.

Erfindungsgemäss werden diese und andere Aufgaben mit einer Anlage mit den Merkmalen des Anspruchs 1 gelöst. Die Anlage zum Konfektionieren von Kabeln kann eine entlang einer Maschinenlängsachse verlaufende Kabelfördereinrichtung zum Transportieren des Kabels in einer Kabeleinzugs- oder Kabeltransportrichtung zu wenigstens einer Bearbeitungsstation aufweisen. Die Kabelfördereinrichtung ist dabei vorzugsweise als Kabelvorschub ausgebildet. Die vorzugsweise als Kabelvorschub ausgebildete Kabeltransportvorrichtung kann als Rollenantrieb oder Bandantrieb ausgeführt sein. Die Anlage weist weiter wenigstens eine einen bevorzugt um eine vertikale Achse drehbaren Schwenkarm mit Kabelgreifer umfassenden erste Schwenkeinheit und wenigstens eine dieser zugeordnete, bezüglich der Maschinenlängsachse seitlich angeordneten bzw. zur Maschinenlängsachse daneben angeordnete Bearbeitungsstation zum Bearbeiten von vorzugsweise abisolierten Kabelenden des Kabels auf. Diese Bearbeitungsstation umfasst ein oder mehrere Bearbeitungsmodule, wobei als Bearbeitungsmodul zum Beispiel ein Crimpmodul mit Crimppresse, ein Tüllenmodul, und ein Gehäusebestückungsmodul in Frage kommen. Die erste Schwenkeinheit dient dazu, das von der Kabelfördereinrichtung kommende vorauseilende Kabelende zur Bearbeitungsstation mit den Bearbeitungsmodulen zuzuführen. Die Anordnung kann weiter eine Abläng- und Abisolierstation zum Ablängen und Abisolieren des Kabels aufweisen. Diese Abläng- und Abisolierstation ist bevorzugt auf der Maschinenlängsachse angeordnet. Durch das Ablängen entsteht ein zweites Kabelende, das nacheilende Kabelende. Das nacheilende Kabelende kann mit einer zweiten Schwenkeinheit und dieser zugeordnete Bearbeitungsstation bearbeitet werden. Die zweite Schwenkeinheit ist bevorzugt gleichartig wie die erste Schwenkeinheit aufgebaut, jedoch auf der bezüglich der Maschinenlängsachse anderen Seite der Anlage. Die als Schwenkmaschine ausgeführte Anlage umfasst sodann einen Schlaufenleger zum Bilden von Kabelschlaufen aus dem Kabel und eine Kabelablage zum wenigstens temporären Aufnehmen eines Loses von fertig konfektionierten Kabelschlaufen. Der Schlaufenleger kann einen Kabelgreifer zum Greifen des ersten bzw. vorauseilenden Kabelendes des Kabels und zum Legen der Kabelschlaufe aufweisen. Der Kabelgreifer des Schlaufenlegers kann dabei beispielsweise um eine Achse drehbar sein, so dass er bildet eine bogenförmige Drehbewegung die Schlaufe bildet, welche Kabelschlaufe dann durch weiteren Vorschub des Kabels mittels der vorerwähnten Kabeltransportvorrichtung auf die gewünschte Länge gebracht werden kann. Nach Beendigung dieser Drehbewegung liegt das vorauseilende Kabelende zum Beispiel um 180° Grad gedreht vor. Die Kabelablage könnte als Aufnahmewanne ausgestaltet sein. Vorteilhaft ist es jedoch, wenn die Kabelablage zum präzisen und geordneten Ablegen über eine plane Ablagefläche verfügt. Dies ermöglicht eine vorteilhafte Handhabung für Lose mit einer Vielzahl von Kabelschlaufen und sogar für mehrere Lose. Ein Los besteht dabei in der Regel aus mehreren, gleichartigen Kabeln (gleicher Querschnitt und Farbe), welche dieselbe Länge aufweisen, gleich konfektioniert sind und als Kabelschlaufen vorliegen; ein Los kann aber auch nur aus einem eine Kabelschlaufe formendes Kabel bestehen. Die unterschiedlichen Lose können einfach voneinander separiert werden, wodurch die weitere Verwendung beispielsweise in einer nachfolgenden Maschine oder zum Transport erheblich vereinfacht wird. Besonders vorteilhaft kann es sein, wenn die Kabelablage kann eine horizontale Ablagefläche aufweist.

Dadurch, dass die Anlage einen Schlaufenstrecker und/oder einen durch einen Greifer gebildeten Schlaufenhalter zum Sichern der Kabelschlaufe umfasst, kann das Kabel beim Bilden und Verlängern der Schlaufe auf optimale Weise geführt werden. Sichern bedeutet hier vor allem, dass ein unerwünschtes Überschlagen des Kabels bei der Schlaufenbildung verhindert werden soll. Der Schlaufenstrecker ist dabei ein Mittel zum Strecken der Kabelschlaufe, welches Mittel auf die Schlaufe im Bereich des Scheitels wirkt; der Schlaufenstrecker kann folglich das Kabel im Scheitelpunkt der Schlaufe einer Zugbelastung aussetzen, sodass die Schlaufe gestreckt (und geführt) ist. Der Schlaufenstrecker kann beispielsweise ein Auszugsgreifer sein. Der Schlaufenstrecker kann jedoch auch ein Mitnehmer, also im Gegensatz zum Auszugsgreifer ein passives Element, welches vom Kabel umschlungen ist oder wird. Der Schlaufenhalter wirkt auf die Kabelschlaufe in deren seitlichen Bereich, also nicht scheitelseitig, sondern auf einen der etwa gleichgerichteten und im Idealfall sogar etwa parallel zueinander verlaufenden Bereiche, die an den Scheitel anschliessen bzw. die sich dort treffen. Der Schlaufenhalter kann dabei ein Greifer sein, der das Kabel der Kabelschlaufe von der Seite her lose erfasst. Das Erfassen mittels des Greifers des Schlaufenhalters von der Seite her kann somit quer zur Maschinenlängsachse, entlang welcher oder in Bezug auf welche die Schlaufe ausgerichtet ist, erfolgen. Das Sichern der Kabelschlaufe kann dabei vorteilhaft wenigstens während der Schlaufenbildung mittels des Schlaufenlegers und bevorzugt während dem Ablegen auf die Kabelablage erfolgen. Diese Anordnung hat weiter den Vorteil, dass unterhalb der Schlaufe der Platz frei sein kann, wodurch ein einfaches und hindernisfreies Ablegen der Kabelschlaufe gewährleistet ist.

In einer bevorzugten Ausführungsform weist die einen Schlaufenleger auf, der um eine Achse in einer bogenförmigen Bewegung drehbar ist. Die Drehachse für die beschriebene Bewegung zum Schlaufenlegen kann in einer bevorzugten Ausführungsform derart sein, dass mittels des Schlaufenlegers eine Kabelschlaufe gebildet werden kann, welche auf einer im Wesentlichen vertikalen Ebene liegt. Die erwähnte Drehachse kann dabei eine horizontale Achse sein. Es kann aber auch vorteilhaft sein, wenn die Achse geneigt im Raum liegt. Die Anlage kann insbesondere in der bevorzugten Ausführungsform kompakt gebaut werden. Das Ablegen der Kabelschlaufe benötigt wenig Platz.

Der Schlaufenstrecker kann einen mittels eines Antriebs linear verfahrbaren Mitnehmer aufweisen. Für das lineare Verfahren kann zum Beispiel eine Linearachse mit einem Riemenantrieb verwendet werden. Besonders vorteilhaft ist es, wenn der Mitnehmer dabei ein achsparallel zur Maschinenlängsachse oder parallel zur Kabeltransportrichtung verfahrbarer Mitnehmer ist. Der Antrieb kann anstelle des Riemenantriebs auch eine anderer Antrieb wie etwa ein Linearantrieb sein.

Der Mitnehmer kann ein horizontales und quer, bevorzugt rechtwinklig, zur Verfahrrichtung des Mitnehmers (welche in der Regel der Richtung der Maschinenlängsachse oder der Kabeltransportrichtung entspricht) sich erstreckendes Eingriffsglied aufweisen. Das Eingriffsglied dringt in die Kabelschlaufe ein und beaufschlägt die Schlaufe von innen her. Der Mitnehmer ist ersichtlicherweise ein passives Element, das einen Anschlag bildet, um welchen das Kabel um 180° aufgebracht sein kann, so dass die Kabelschlinge parallel zueinander verlaufende Kabelabschnitte aufweist. Es sind aber auch andere Umschlingungswinkel denkbar, insbesondere können sie kleiner als 180° sein. Dies ergäbe eine Schlaufe mit stumpfwinklig aufeinander zulaufende Kabelabschnitten.

Die Anlage kann bevorzugt einen Schlaufenstrecker mit einem verfahrbaren Mitnehmer und einen durch einen Greifer gebildeten Schlaufenhalter aufweisen. Wenn beide Maschinenkomponenten zum Sichern der Kabelschlaufe, d.h. sowohl Schlaufenstrecker als auch Schlaufenhalter, in der Anlage vorgesehen sind, kann die Anlage besonders effizient und sicher betrieben werden, ohne dass ein Überschlag möglich ist.

Der Linearantrieb des Schlaufenstreckers kann ein feststehendes Lager und auf dem Lager geführter beweglicher Schlitten, an dem der Mitnehmer angeordnet ist, aufweisen, wobei die Bewegung des Schlittens durch elektromagnetische Kräfte erfolgt. Weiter kann eine horizontale Tragstruktur vorgesehen sein, in der das genannte feststehende Lager des Linearantrieb oder die Linearachse des Schlaufenstreckers angeordnet ist. An diesem Schlitten kann weiter ein Trägerteil zum Tragen des Greifers für den Schlaufenhalter befestigt sein.

Eine weitere Ausführungsform betrifft eine Anlage, bei der der Schlaufenhalter im Bereich einer zweiten Schwenkeinheit in der Anlage angeordnet ist, so dass ein nacheilendes Kabelende des zur Schlaufe geformten Kabels mittels der zweiten Schwenkeinheit zu einer Bearbeitungsstation gebracht werden kann, während der Schlaufenhalter das Kabel hält, und dass die Kabelschlaufe so wenigstens im Bereich des Scheitels seine ursprüngliche Form behält.

Wenn die Anlage eine zweite Schwenkeinheit und wenigstens eine dieser zugeordnete Bearbeitungsstation aufweist, kann es vorteilhaft sein, wenn der Schlaufenleger und die zweite Schwenkeinheit derart ausgeführt sind, dass die fertig konfektionierte Kabelschlaufe mittels der jeweiligen Kabelgreifer des Schlaufenlegers einerseits und der zweiten Schwenkeinheit andererseits auf die Kabelablage ablegbar ist.

Jede Schwenkeinheit kann jeweils ein Grundgestell für die schwenkbare Lagerung des Schwenkarms aufweisen, mit welchem der Schwenkarm um eine vertikale Achse schwenkbar verbunden ist. Im Grundgestell kann ein Antrieb zum Schwenken des Schwenkarms angeordnet sein. Der Schwenkarm der ersten Schwenkeinheit kann auf einer Oberseite eines Grundgestell für die schwenkbare Lagerung des Schwenkarms positioniert sein. Der Schwenkarm der zweiten Schwenkeinheit kann auf einer Unterseite eines Grundgestell für die schwenkbare Lagerung des Schwenkarms positioniert sein.

Für einen sicheren und zuverlässigen Betrieb der Anlage kann es vorteilhaft sein, wenn die Kabelablage für ein Fertigungslos wenigstens ein Halteelement zum Halten einer abgelegten Kabelschlaufe im Bereich eines Kabelendes und vorzugsweise zwei Halteelemente zum Halten beider Kabelenden der Kabelschlaufe umfasst. Das Halten der Kabelenden kann zum Ordnen lose erfolgen. Ein eigentliches Festhalten bzw. Fixieren des Kabels ist nicht unbedingt notwendig. Selbstverständlich ist es für bestimmte Anwendungen denkbar, wenn das Halteelement das Kabel z.B. mittels Klemmkraft, fixiert, so dass es unverlierbar gehalten ist.

Das Halteelement hat dabei insbesondere die Funktion, die Kabelenden eines Loses von den Kabelenden des nächsten Loses zu separieren, sie können aber optional auch ausgestaltet sein, zusätzlich auch die Kabelenden zu fixieren.

Das wenigstens eine Halteelement kann vorteilhaft derart ausgeführt sein, dass mehrere Kabelschlaufen eines Fertigungsloses gehalten werden können. Das Halteelement kann somit mehrere Kabelenden halten.

Das wenigstens eine Halteelement kann lösbar mit der Kabelablage verbunden sein, so dass es bei Bedarf von der der Kabelablage abgetrennt und zusammen mit der oder den Kabelschlaufen zur Weiterverarbeitung transportiert werden kann. Weitere Verarbeitungsstationen könnten zum Beispiel beispielsweise Verlegebretter für Kabelbäume sein. Für die lösbare Verbindung kommen zum Beispiel mechanische Verbindungsmittel in Frage, wie etwa Steckverbindungen oder rastende Verbindungen. Als mechanische Verbindungsmittel sind dabei insbesondere aktiv zu öffnende Verriegelungen denkbar. Vorteilhaft kann es aber auch sein, wenn das wenigstens eine Halteelement magnetisch an der Kabelablage aufgebracht ist. Für die magnetische Verbindung kann ein Permanentmagnet im Halteelement integriert sein, die Kabelablage kann aus ferromagnetischen Materialien bestehen oder umfassen.

Die Kabelablage kann als Fördereinrichtung zum Transportieren wenigstens eines Fertigungsloses und bevorzugt mehrerer Fertigungslose mit fertig konfektionierten Kabelschlaufen ausgeführt sein, wobei für den Fall der mehreren Fertigungslose auf der Kabelablage hintereinander angeordnete Halteelemente angeordnet sind. Diese Halteelemente können dabei vorteilhaft in vorzugsweise gleichmässigen Abständen - in Bezug auf die Förderrichtung- auf der Kabelablage angeordnet sein. Die Anordnung der Halteelemente kann dabei eine feste oder nur temporäre (z.B. magnetische) Anordnung sein.

In einer bevorzugten Ausführungsform ist die Kabelablage zum Bilden eines Ablagebandes als Förderband ausgeführt, wobei die Kabelschlaufen auf dem oberen, sich in Kabelförderrichtung bewegenden oder bewegbaren Abschnitt des Förderbands abgelegt werden. Die Anlage kann zum Beispiel derart betrieben werden, dass während dem Ablegen der Kabelschlaufen das Förderband still steht und dass nachdem die letzte Kabelschlaue eines Loses abgelegt wurde, das Förderband bewegt wird. Die Förderstrecke, um die das Förderband bewegt wird, kann dabei dem Abstand bis zum nächsten Halteelement entsprechen. Diese bevorzugte Ausführungsform mit der als Förderband ausgeführten Kabelablage könnte auch bei anderen Anlagen zum Konfektionieren von Kabeln als bei der vorgängig beschriebenen Schwenkmaschine verwendet werden. Die als Förderband ausgeführte Kabelablage könnte zum Beispiel auch für gattungsmässig vergleichbare Anlagen gemäss Oberbegriff von Anspruch 1, welche über keine Schlaufenstrecker und Schlaufenhalter verfügen, vorteilhaft sein.

Bevorzugt kann die als Förderband ausgeführte Kabelablage einen um endseitige Rollen endlos umlaufenden Fördergurt aufweisen, auf welchem Fördergurt zum Vorgeben von Andockstellen Basen angeordnet sind, von welchen Basen Halteelemente abtrennbar und an welche Basen Halteelemente anbringbar sind.

Für ein sicheres Ablegen der Kabelschlaufen können je Fertigungslos zwei Halteelemente vorgesehen sein, wobei die jeweiligen Halteelemente vorteilhaft randseitig auf dem Fördergurt des Förderbands positioniert sind.

Die Halteelemente können derart auf dem auf dem Fördergurt des Förderbands positioniert sein, dass die Halteelemente bzw. die von ihnen gehaltenen Kabelenden in einer Draufsicht eine V-förmige Konfiguration ausbilden. Dank einer solchen Anordnung kann die Schwenkeinheit der Anlage in optimaler Art und Weise verwendet werden.

Alternativ zur Variante mit dem Förderband kann die Kabelablage derart ausgeführt sein, dass sie von der Anlage entkoppelt werden kann. Insbesondere kann die Kabelablage als mobile Kabelablageeinheit ausgeführt oder Bestandteil einer mobilen Kabelablageeinheit sein, wodurch die mobile Kabelablageeinheit von der Anlage abkoppelbar und mittels einer Transportvorrichtung separat von der Anlage transportierbar ist. Diese alternative Ausführungsform mit der mobilen Kabelablageeinheit könnte auch bei anderen Anlagen zum Konfektionieren von Kabeln verwendet werden. Die mobile Kabelablageeinheit könnte zum Beispiel auch für gattungsmässig vergleichbare Anlagen gemäss Oberbegriff von Anspruch 1, welche über keine Schlaufenstrecker und Schlaufenhalter verfügen, vorteilhaft sein.

Die mobile Kabelablageeinheit kann zur Aufnahme von mehreren Kabelablagen eingerichtet sein. Dabei können die Kabelablagen mittels einer Wechseleinrichtung von einer Wartestellung in eine Koppelstellung gebracht werden, in welcher Koppelstellung die jeweilige Kabelablage mit der Anlage ankoppelbar ist.

Die mobile Kabelablageeinheit kann zum Beispiel einen Flansch zum temporären Aufnehmen von mehreren Kabelablagen aufweisen, der eine revolverartige Wechseleinrichtung aufweist, mit der Kabelablagen um eine horizontale Drehachse zum Wechseln, d.h. zum Transfer von der Wartestellung in die Koppelstellung, drehbar sind.

Die mobile Kabelablageeinheit kann weiter eine zweiseitig ausgeführte Trägereinheit, wobei die Trägereinheit beispielsweise durch den oben erwähnten Flansch gebildet ist, aufweisen, auf welche Trägereinheit Kabelablagen von zwei entgegengesetzten Seiten her temporär anbringbar sind. Eine derartige zum Be- und Entladen zweiseitig ausgeführte Trägereinheit hat den Vorteil, dass die mobile Kabelablageeinheit lediglich um 180° gedreht werden muss.

Die Kabelablage einer mobilen Kabelablageeinheit kann wenigstens in einem vorderseitigen Bereich, in dem Kabelenden der Kabelschlaufen ablegbar sind, und vorzugsweise in einem Bereich, in dem das wenigstens eine Halteelement vorgesehen ist, eine Ablageplatte aufweisen. Die Kabelablage ist somit im vorderseitigen Bereich plattenförmig ausgestaltet. In einem der Vorderseite entgegengesetzten hinteren Bereich der Kabelablage kann die Kabelablage wannenförmig ausgestaltet sein.

Die mobile Kabelablageeinheit zum Bilden eines autonomen Förderwagens eine Transportvorrichtung aufweisen, die in der Lage ist, sich autonom und damit größtenteils unabhängig von Steuersignalen, die sonst durch einen Bediener während der Fahrt zur Verfügung gestellt werden müssen, zu bewegen. Der Förderwagen kann mittels Rädern gegenüber einem Boden bewegt werden. Der Förderwagen kann wenigstens einen Elektromotor umfassen, mit dem wenigstens eines der Räder antreibbar ist.

Ein weiterer Aspekt der Erfindung kann ein System mit der vorgängig beschriebenen Anlage sowie einer als autonomen Förderwagen ausgeführten Transportvorrichtung zum Transportieren der mobilen Kabelablageeinheit betreffen. Das System kann dabei mehrere autonome Förderwagen umfassen.

Weitere Vorteile und Einzelmerkmale ergeben sich aus der nachfolgenden Beschreibung von Ausführungsbeispielen und aus den Zeichnungen. Es zeigen:
- Figur 1: eine Draufsicht auf eine als Schwenkmaschine ausgeführte Anlage zum Konfektionieren von Kabeln gemäss dem Stand der Technik,
- Figur 2: eine perspektivische Ansicht der Schwenkmaschine von Figur 1,
- Figur 3: eine perspektivische Ansicht einer erfindungsgemässen als Schwenkmaschine ausgeführten Anlage zum Konfektionieren von Kabeln,
- Figuren 4 bis 9: die Schwenkmaschine aus Figur 3 in verschiedenen Stellungen beim Bilden und Konfektionieren einer Kabelschlaufe,
- Figur 10: eine vereinfachte Darstellung einer Kabelschlaufe nach einem unerwünschten Überwurf,
- Figur 11: eine perspektivische Ansicht einer erfindungsgemässen Anlage mit einer Schwenkmaschine gemäss Figur 3 und mit einer als Förderband ausgeführten Kabelablage,
- Figur 12: eine vereinfachte Darstellung einer als Förderband ausgeführten Kabelablage für die Schwenkmaschine in einer Seitenansicht,
- Figur 13: eine perspektivische Ansicht einer erfindungsgemässen Anlage mit der Schwenkmaschine in der Art von Figur 3 und mit einem *autonomen* Förderwagen zum Transportieren von Kabelablagen für die Schwenkmaschine, und
- Figur 14: eine alternative Ausgestaltung der Anordnung aus Figur 13, wobei ein Förderwagen zum Transportieren von Kabelablagen von der Schwenkmaschine abgekoppelt und von dieser entfernt worden ist.

Figur 1 zeigt eine insgesamt mit 51 bezeichnete Anlage konventioneller Bauart zum Konfektionieren von Kabeln. Die Anlage 51 umfasst eine als Bandförderer ausgestaltete Kabelfördereinrichtung 4, welche das Kabel entlang einer Maschinenlängsachse 50 zu Schwenkeinheiten 5 und 6 bringt. Die Kabelfördereinrichtung 4 fördert dabei das Kabel in f-Richtung. Mit 13 ist eine Abläng- und Abisolierstation bezeichnet, mit der das Kabel abgelängt und die beiden Kabelenden abisoliert werden. Die Abläng- und Abisolierstation 13 liegt ersichtlicherweise auf der Maschinenlängsachse 50. Die weiteren Bearbeitungsstationen 21 und 22 liegen in der Draufsicht neben der Maschinenlängsachse 50. Die um vertikale Achsen drehbare Schwenkeinheiten 5, 6 verfügen jeweils über einen Kabelgreifer zum Halten des Kabels. Mit den Kabelgreifern der Schwenkeinheiten 5, 6 können die jeweiligen Kabelenden den Bearbeitungsstation 21, 22 zugeführt werden. Die Bearbeitungsstation 21 dient dabei zum Bearbeiten des vorauseilenden Kabelendes des Kabels und wirkt mit der ersten Schwenkeinheit 5 zusammen. Die Bearbeitungsstation 22 dient dabei zum Bearbeiten des nacheilenden Kabelendes des Kabels und wirkt mit der zweiten Schwenkeinheit 6 zusammen. Derartige Schwenkeinheiten umfassende Anlagen 51 sind dem Fachmann auch unter dem Begriff "Schwenkmaschine" bekannt. In der Schwenkmaschine 51 können Elektrokabel, beispielsweise isolierte Litzen oder Vollleiter aus Kupfer oder Stahl, bearbeitet und konfektioniert werden. Die zu verarbeitenden Kabel werden in (nicht dargestellten) Fässern, auf Rollen oder als Bündel bereitgestellt.

In der Ausführungsvariante gemäss Figur 1 weisen die jeweiligen Bearbeitungsstationen 21, 22 der als Schwenkmaschine ausgeführte Anlage 51 beispielhaft jeweils ein Crimpmodul mit einer Crimppresse auf. Bei der vorliegend beispielhaft erläuterten Konfektionierung werden die Kabelenden zunächst abgelängt und abisoliert und danach gecrimpt. Die Kabelenden können je nach Bedarf auch mit Tüllen versehen werden. Für diesen Fall würden die Bearbeitungsstationen 21, 22 zusätzlich Tüllenmodule aufweisen. Die jeweilige Bearbeitungsstation kann somit mehrere Bearbeitungsmodule umfassen, wobei als Bearbeitungsmodul das Crimpmodul mit Crimppresse, ein Tüllenmodul und weitere Module wie etwa ein Gehäusebestückungsmodul in Frage kommen. Vor der Kabelfördereinrichtung 4 kann gegebenenfalls eine (nicht dargestellte) Richteinheit angeordnet, die ebenfalls auf der Maschinenlängsachse 50 liegt. Figur 1 betrifft eine Anlage 51 zum Konfektionieren von (nicht dargestellten) Kabeln, die gerade bleiben. Die Anlage 51 verfügen in über ein Transportband 41 zum Strecken des Kabels. Das fertig konfektionierte Kabelstück gelangt dann in eine Kabelwanne 42, die zur Ablage und Zwischenspeicherung dient. Von der Kabelwanne 42 können die Kabelstücke in eine Entnahmewanne 43 gebracht werden. Details zur Ausgestaltung einer solchen Konfektionieranlage insbesondere im Hinblick auf die Wannen sind aus der EP 2 028 732 A2 entnehmbar. Die perspektivische Darstellung von Figur 2 zeigt nochmals dieselbe Anlage 51.

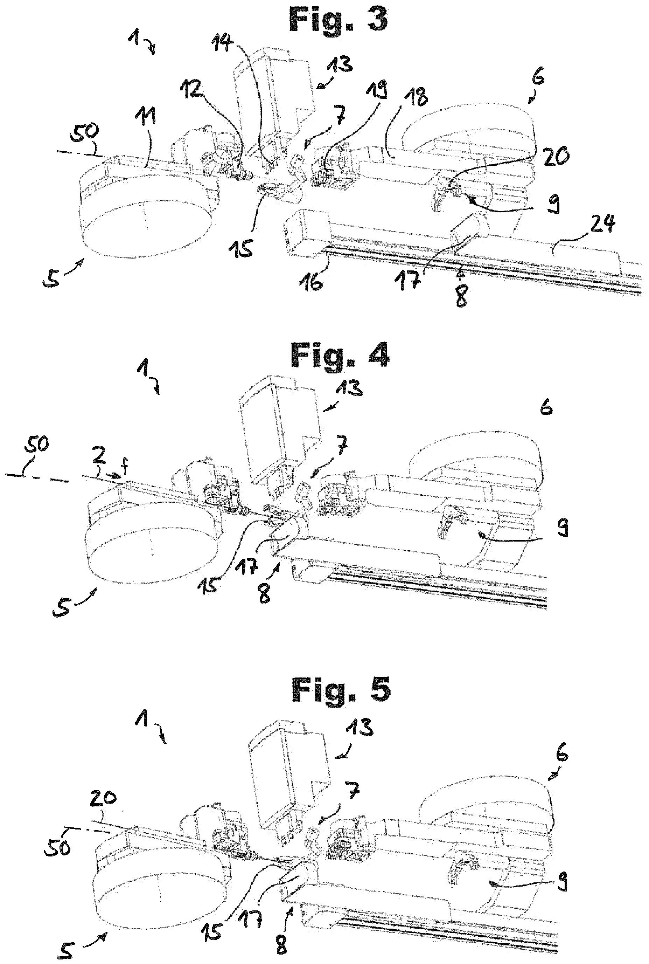

Figur 3 zeigt eine neuartige als Schwenkmaschine ausgeführte Anlage 1 zum Konfektionieren von Kabeln, bei welcher keine geraden Kabelstücke hergestellt werden, sondern bei der die Kabel zu Kabelschlaufen geformt werden. Der Einfachheit halber sind in Figur 3 von der Schwenkmaschine 1 nur die in Bezug auf die Erfindung wichtigsten Komponenten dargestellt. Die Schwenkmaschine 1 umfasst in an sich bekannter Weise eine erste Schwenkeinheit 5 mit einem um eine vertikale Achse drehbaren Schwenkarm 11 mit dem Kabelgreifer 12. Die Schwenkmaschine 1 umfasst weiter eine zweite Schwenkeinheit 6 mit einem um eine vertikale Achse drehbaren Schwenkarm 18 mit dem Kabelgreifer 19. Den Schwenkeinheiten 5 und 6 zugeordnete Bearbeitungsstationen sind zwar ebenfalls vorhanden, hier jedoch nicht gezeigt. In Figur 3 sind von der Abläng- und Abisolierstation 13 die oberen Abisoliermesser erkennbar, die den oberen Abisoliermesser gegenüberliegenden unteren Abisoliermesser sind zum besseren Verständnis des Aufbaus der Schwenkmaschine 1 nicht dargestellt. Der grundsätzliche Aufbau der Schwenkmaschine 1 bezüglich der Schwenkeinheiten ist gleich oder wenigstens ähnlich wie bei der in Figur 1 gezeigten Schwenkmaschine 51. Die in Figur 3 gezeigte Anordnung unterscheidet sich jedoch darin, was im Bereich und nach der zweiten Schwenkeinheit 6 angeordnet ist.

Jede Schwenkeinheit 5, 6 weist jeweils ein Grundgestell für die schwenkbare Lagerung des Schwenkarms 11, 18 auf, mit welchem Grundgestell der Schwenkarm um eine vertikale Achse schwenkbar verbunden ist. Im Grundgestell kann ein Antrieb zum Schwenken des jeweiligen Schwenkarms 11, 18 angeordnet sein. Der Schwenkarm 11 der ersten Schwenkeinheit 5 kann auf einer Oberseite eines Grundgestell für die schwenkbare Lagerung des Schwenkarms positioniert sein. Der Schwenkarm 18 der zweiten Schwenkeinheit 6 kann auf einer Unterseite eines Grundgestell für die schwenkbare Lagerung des Schwenkarms positioniert sein.

Die Schwenkmaschine 1 zeichnet sich dadurch aus, dass sie einen Schlaufenleger 7 zum Bilden von Kabelschlaufen aus dem Kabel, einen Schlaufenstrecker 8 und einen durch einen Greifer 20 gebildeten Schlaufenhalter 9 zum Sichern der Kabelschlaufe aufweist. Die Schwenkmaschine 1 kann weiter eine (hier nicht dargestellte ) Kabelablage zum wenigstens temporären Aufnehmen eines Loses von fertig konfektionierten Kabelschlaufen aufweisen.

Der Schlaufenleger 7 weist einen Kabelgreifer 15 zum Greifen des vorauseilenden Kabelendes des Kabels und zum Legen der Kabelschlaufe auf. Der Kabelgreifer 15 ist um eine horizontale Achse drehbar und kann durch eine bogenförmige Drehbewegung aus dem Kabel die Schlaufe bilden.

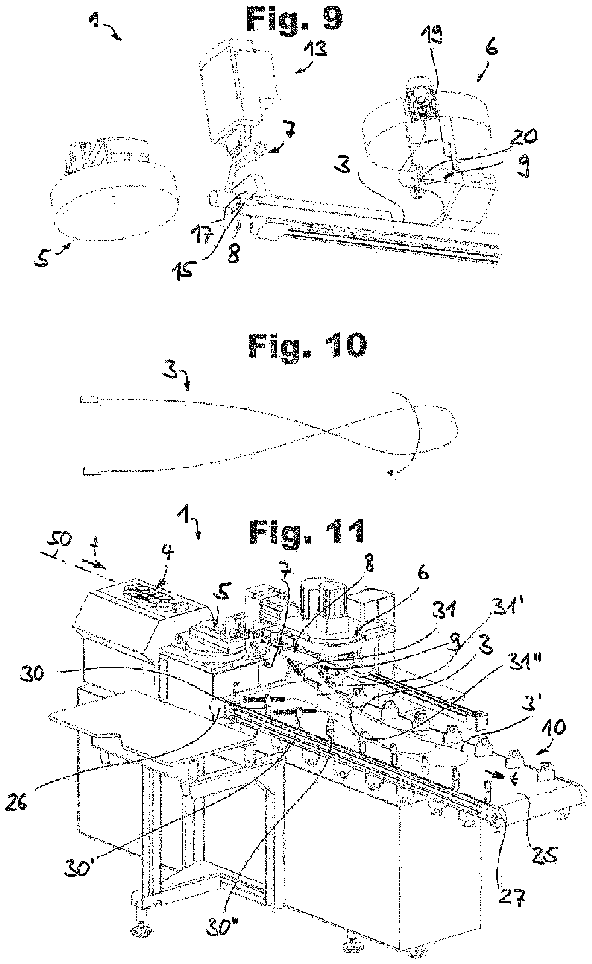

Der Schlaufenstrecker 8 zum Strecken der Kabelschlaufe umfasst einen Mitnehmer 17, der auf die Schlaufe im Bereich des Scheitels wirkt. Der Mitnehmer 17 ist achsparallel zur Maschinenlängsachse 50 mittels eines Antriebs 16 verfahrbar. Der Mitnehmer 17 kann das Kabel erfassen und in e-Richtung achsparallel zur Maschinenlängsachse 50 ziehen, wodurch die Schlaufe gestreckt und geführt wird. Der Mitnehmer 17 setzt die Schlaufe im Scheitelpunkt einer Zugbelastung aus. Der Schlaufenhalter 9 ist im Wesentlichen ein Greifer 20, der das Kabel von der Seite her lose erfassen und halten kann. Der Schlaufenhalter 9 wirkt somit auf die Kabelschlaufe in deren seitlichen Bereich, also nicht scheitelseitig, sondern im einem der parallel zueinander verlaufenden Bereichen der Kabelschlaufe. Der Schlaufenstrecker 8 kann mit anderen Worten auf einer Linearachse parallel zur Kabeleinzugsrichtung verschoben werden. Diese Längsbewegung ist von der gewünschten Kabellänge für die Schlaufe abhängig und sollte idealerweise koordiniert mit dem Kabelvorschub erfolgen, um die Schlaufe in optimaler Weise zu strecken. Der Kabelstrecker 8 ist so geformt, dass das Kabel während dem Strecken der Schlaufe passiv gehalten ist. Dank dem Schlaufenstrecker 8 kann sichergestellt werden, dass ein unerwünschtes Überschlagen des Kabels bei oder nach der Schlaufenbildung verhindert werden kann. Auch der Schlaufenhalter 9 hilft, ein Überschlagen des Kabels zu verhindern. Die Position des Schlaufenhalters 9 ist von der Schlaufenlänge abhängig. Für seine Positionierung kann die Linearbewegung des Schlaufenstreckers 8 ausgenutzt werden. Figur 10 zeigt ein unerwünschtes Überschlagen einer Kabelschlaufe. Dank dem Schlaufenhalter 9, der die vom Schlaufenstrecker 8 gestreckte Schlaufe mit seinem Greifer 20 übernimmt, kann erreicht werden, dass der Schlaufenstrecker 8 vor dem Bilden der nächsten Schlaufe bereits in seine Ausgangsstellung zurückgefahren werden kann. Anstelle des hier gezeigten Mitnehmers 17 wären auch andere Varianten von Schlaufenstreckern denkbar. Anstatt des Mitnehmers als passives Element könnte der Schlaufenstrecker auch einen Auszugsgreifer umfassen, der das Kabel umgreift und es in e-Richtung zieht. Es ist weiter auch vorstellbar, dass der Greifer 20 des Schlaufenhalters 9 das Strecken der Schlaufe übernimmt. In diesem (hier nicht dargestellten) Fall wäre der Greifer 20 eine Art Auszugsgreifer, der das Kabel nicht von einer axialen Seite her, sondern quer zur Maschinenlängsachse erfasst.

Wenn die Linearachse 16 des Schlaufenstreckers 8 als Linearantrieb ausgestaltet ist, umfasst umfass sie ein feststehendes Lager und einen auf dem Lager geführter beweglicher Schlitten 24, an dem der Mitnehmer 17 angeordnet ist. Die Bewegung des Schlittens 24 erfolgt in diesem Fall durch elektromagnetische Kräfte. Das Lager ist in einer horizontalen Tragstruktur 35 integriert.

Im vorliegenden Ausführungsbeispiel weist die Linearachse 16 jedoch einen Riemenantrieb, vorzugsweise ein Zahnriemenantrieb, auf, der in einem Gehäuse 23 verbaut ist. Weiter ist aus Figur 3 erkennbar, dass am Schlitten 24 ein Trägerteil zum Tragen des Greifers 20 für den Schlaufenhalter 9 befestigt ist. Beim Bewegen des Schlittens 24 zum Verfahren des Schlaufenstreckers 8 wird somit der Schlaufenhalter 9 mitbewegt.

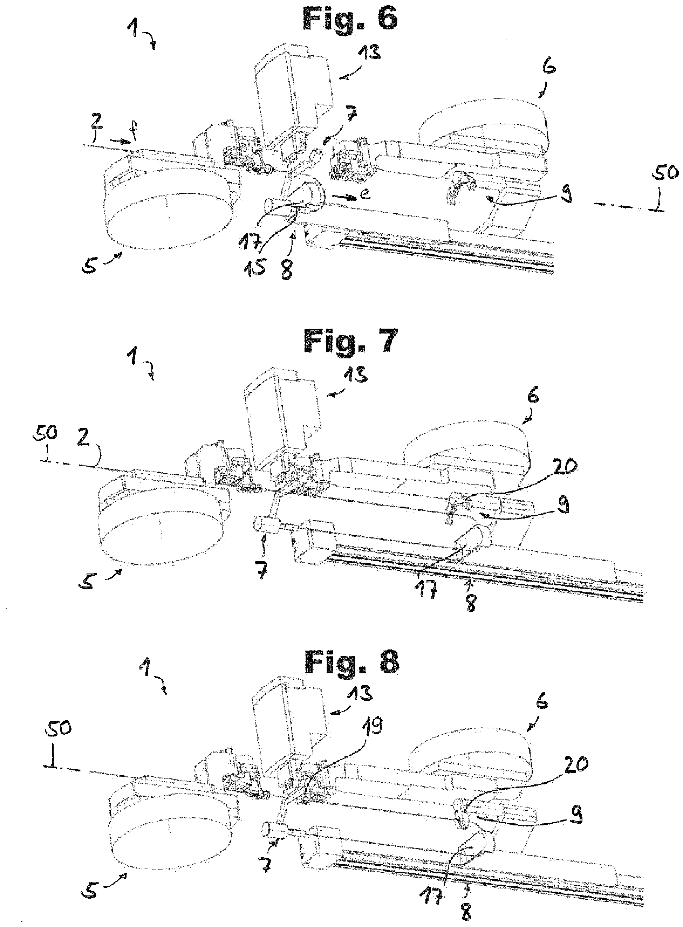

Die Wirkungsweise der erfindungsgemässen Schwenkmaschine 1 ist in den nachfolgenden Figuren gezeigt. Aus den Figuren 4 bis 9 geht hervor, wie aus dem Kabel eine Kabelschlaufe gebildet wird und wie die konfektionierte Kabelschlaufe entsteht. Figur 4 zeigt die Schwenkmaschine 1 vor Beginn der Schlaufenbildung. Das mit 2 bezeichnete Kabel wird vom Kabelgreifer 12 der ersten Schwenkeinheit 5 erfasst. Das vorauseilende Kabelende des Kabels 2 ist bereits konfektioniert. Das Kabel 2 wurde hierzu in der Abläng- und Abisolierstation 13 abisoliert. Wie aus Figur 3 erkennbar ist, befindet sich der Kabelgreifer 15 des Schlaufenleger 7 in einer Ausgangsstellung neben der Abläng- und Abisolierstation 13, so dass der Kabelgreifer 15 beim Schneiden und Abisolieren nicht seitwärts aus dem Bereich der Messer verfahren werden muss. Durch Schwenken des Schenkarms 11 wurde das Kabel 2 zu den Modulen der (hier nicht dargestellten) Bearbeitungsstation gebracht und dort bearbeitet, z.B. gecrimpt, und dann zurück in die in Figur 3 gezeigte leicht ausgeschwenkte Stellung gebracht, in der es bezüglich des Kabelgreifers 15 auf diesen ausgerichtet ist. Das so bereits konfektionierte Kabelende kann nun vom Schlaufenleger 7 übernommen werden. Wie Figur 4 zeigt, wird das Kabelende in den offenen Kabelgreifer 15 des Schlaufenleger 7 gebracht. Das Kabel kann nun vom Kabelgreifer 15 ergriffen werden. Die Stellung mit geschlossenen Kabelgreifer 15 ist in Figur 5 gezeigt. Der Kabelgreifer 15 dreht sich nun um eine Achse und bildet durch eine bogenförmige Drehbewegung eine Schlaufe. Dabei wird das Kabel um den Mitnehmer 17 gelegt. Der Kabelgreifer 15 des Schlaufenlegers 7 ist, wie Figur 6 zeigt, in dieser Stellung um 180° gedreht. Nach Beendigung dieser Drehbewegung liegt entsprechend das vorauseilende Kabelende um 180° gedreht vor. Die erwähnte Achse für die Drehbewegung zum Bilden der Achse liegt im vorliegenden Ausführungsbeispiel etwas geneigt im Raum, so dass nach der 180°-Drehung der Kabelgreifer 15 derart positioniert ist, dass die Kabelschlaufe auf einer vertikalen Ebene liegt. Dank der etwas gegenüber der Horizontalen schrägen Achse muss der Kabelgreifer 15 von der in Figur 3 gezeigten Ausgangstellung, in der er seitlich neben der Maschinenlängsachse 50 positioniert ist, nicht seitwärts verschoben werden um das Kabel erfassen zu können und danach in die in Figur 6 gezeigte Stellung gelangen zu können. Der Kabelgreifer 15 des Schlaufenlegers 7 verbleibt nun in dieser Lage. Nun kann die Kabelschlaufe mit der gewünschten Kabellänge gebildet werden. Dazu wird das Kabel durch weiteren Vorschub mittels der (hier nicht dargestellten) Kabelfördereinrichtung auf die gewünschte Länge gebracht und synchron der Mitnehmer 17 des Schlaufenstreckers in e-Richtung verfahren, der die Kabelschlaufe gestreckt hält. Dies entsprechende Stellung ist in Figur 7 gezeigt. Hier ist auch gut erkennbar, dass der Mitnehmer 17 ein horizontales und rechtwinklig, zur Verfahrrichtung des Mitnehmers sich erstreckendes Eingriffsglied aufweist. Das Eingriffsglied dringt in die Kabelschlaufe ein und beaufschlägt die Schlaufe von innen her. Der Mitnehmer ist ein passives Element, das einen Anschlag bildet, um welchen das Kabel um 180° aufgebracht ist, so dass die Kabelschlinge parallel zueinander verlaufende Kabelabschnitte bildet. Nachdem der Mitnehmer vollständig verfahren wurde und die Kabelschlaufe die gewünschte Schlaufenlänge erreicht hat, kann nun die zweite Schwenkeinheit 6 aktiviert werden. Der Kabelgreifer 19 der zweite Schwenkeinheit 6 erfasst das Kabel. Gleichzeitig oder schon vorher umschliesst der Greifer 15 des Schlaufenhalters 9 das Kabel im oberen Abschnitt der Kabelschlaufe (Figur 8). Das Kabel 2 wird in der Abläng- und Abisolierstation 13 abgelängt und das so entstandene Kabelende wird abisoliert. Das vom Kabelgreifer 19 der zweiten Schwenkeinheit 6 erfasste nacheilende Kabelende des Kabels der Kabelschlaufe wird geschwenkt und zu den Modulen der (hier nicht dargestellten) Bearbeitungsstation gebracht und dort bearbeitet, z.B. gecrimpt. Figur 9 zeigt eine solche Stellung, in der der Schwenkarm 18 der zweiten Schwenkeinheit 6 sich in einer ausgeschwenkten Stellung befindet. Nachdem am zweiten Kabelende alle notwendigen Bearbeitungen durchgeführt worden sind, ist die Kabelschlaufe 3 fertig konfektioniert und kann auf eine (hier nicht dargestellte) Kabelablage gelegt werden. Hierzu kann der Schlaufenleger 7 und die zweite Schwenkeinheit 6 derart ausgeführt sein, dass die fertig konfektionierte Kabelschlaufe 3 mittels der jeweiligen Kabelgreifer 15, 19 des Schlaufenlegers 7 einerseits und der zweiten Schwenkeinheit 6 andererseits auf die Kabelablage ablegbar ist. Die Kabelschlaufe 3 bleibt bevorzugt auch beim Ablegen nach wie vor unter Einwirkung des Schlaufenhalters 9, sodass durch das Halten des Kabels ein Überschlag bei der Ablage verhindert werden kann. Während dem Ablegen bleibt der Schlaufenhalter 9 vorteilhaft demnach geschlossen; alternativ wäre auch vorstellbar, dass der Schlaufenstrecker in seiner Position bleibt, um ein Überschlagen der Schlaufe zu verhindern.

Da der Schlaufenleger 7 um eine Achse in einer bogenförmigen Bewegung drehbar ist, wird eine Kabelschlaufe 3 gebildet, welche ersichtlicherweise auf einer im Wesentlichen vertikalen Ebene liegt. Diese Anordnung hat den Vorteil, dass das Ablegen der Kabelschlaufe einfach möglich ist, weil unterhalb der Schlaufe keine störenden Teile oder Hindernisse vorhanden sind.

Die vertikale Ausrichtung der ganzen Kabelschlaufe bei der Schlaufenbildung ist insbesondere in den Figuren 7 und 8 gut erkennbar. In der in Figur 9 gezeigten Stellung liegt die Kabelschlaufe bereichsweise, d.h. vom vorderen bzw. vorauseilenden Kabelende bis zum Schlaufenhalter 9, immer noch auf einer vertikalen Ebene. Ein Bereich der Kabelschlaufe befindet sich nicht mehr in der genannten vertikalen Ebene. Vom Schlaufenhalter 9 bis zum nacheilenden Kabelende ist das Kabel ausgeschwenkt und schon horizontal ausgerichtet. Ausgehend von einer solchen ausgeschwenkten Stellung könnte beispielsweise durch nach unten Fahren des Kabelgreifers 19 wenigstens der hintere Teil Kabelschlaufe abgelegt werden. Der vordere Teil der Kabelschlaufe, als derjenige Teil, der dem vorauseilenden Kabelende zugeordnet ist, kann durch nach unten Fahren des Kabelgreifers 15 abgelegt werden.

Figur 11 zeigt eine weitere als Schwenkmaschine ausgeführte Anlage 1 zum Konfektionieren von Kabeln, mit welcher konfektionierte Kabel in Form von Kabelschlaufen hergestellt werden. Diese Schwenkmaschine 1 umfasst die entlang der Maschinenlängsachse 50 verlaufende Kabelfördereinrichtung 4 zum Transportieren des Kabels 2 in Kabeltransportrichtung f zu Bearbeitungsstationen, zwei Schwenkeinheiten 5, 6, den Schlaufenleger 7, den Schlaufenstrecker 8 und den durch den Greifer 20 gebildeten Schlaufenhalter 9. Die Schwenkmaschine 1 umfasst weiter eine nachfolgend im Detail beschriebene spezielle Kabelablage 10 zum Aufnehmen von Losen von fertig konfektionierten Kabelschlaufen 3.

Die als Kabelvorschub ausgestaltete Kabelfördereinrichtung 4 der Schwenkmaschine 1 ist vorliegend als Bandförderer ausgestaltet. Zwischen den beiden Bändern kann das Kabel 2 klemmend erfasst und transportiert werden. Die Kabelfördereinrichtung 4 könnte grundsätzlich auch als Rollenantrieb ausgeführt sein. Die Kabelfördereinrichtung kann weiter ein Längenmesseinrichtung aufweisen, das ausgangsseitig an den Bandantrieb folgend angeordnet ist, und mit dem die Länge der Kabelschlaufe gemessen oder überprüft werden kann.

Die Schwenkmaschine 1 ist in Bezug auf die beiden Schwenkeinheiten 5, 6, dem Schlaufenleger 7, dem Schlaufenstrecker 8 und dem Schlaufenhalter 9 im Wesentlichen gleich wie die in den Figuren 3 bis 9 gezeigte Schwenkmaschine 1 ausgestaltet. Unter der Kabelablage wird in dieser Anmeldung eine Ablage für Kabel in Form von Kabelschlaufen verstanden. Im Ausführungsbeispiel gemäss Figur 11 ist die Kabelablage 10 zum Bilden eines Ablagebandes als Förderband ausgeführt ist, wobei die Kabelschlaufen auf dem oberen, sich in Kabelförderrichtung bewegenden Abschnitt des Förderbands abgelegt wird. Die Transportrichtung des Förderbands ist mit einem Pfeil t angedeutet, welche ersichtlicherweise in dieselbe Richtung wie die bereits vorher erwähnte Kabelförderrichtung f verläuft. Das Förderband umfasst dabei einen um endseitige Rollen 26, 27 endlos umlaufen-den Fördergurt 25.

Da die Kabel sich aufgrund ihrer Elastizität und den Bewegungen der Schwenkmaschine 1 nach der Ablage noch verschieben können, ist es vorteilhaft, mindestens die Vorderenden oder die Hinterenden eines Loses in Halteelementen aufzunehmen. Die Halteelemente verhindern dabei, dass sich die Kabelenden eines Loses mit denen des nächsten Loses vermischen. Die Kabelablage 10 umfasst gemäss vorliegendem Ausführungsbeispiel für ein Fertigungslos zwei Halteelemente 30, 31 zum Halten einer abgelegten Kabelschlaufe 3, wobei wie aus Figur 11 erkennbar ist, das jeweilige Halteelement 30, 31 je ein Kabelende der Kabelschlaufe hält.

Je Fertigungslos sind also zwei Halteelemente 30, 31 vorgesehen, wobei die jeweiligen Halteelemente 30, 31 randseitig auf dem Fördergurt 25 des Förderbands positioniert sind. Die zwei Halteelemente 30, 31 zum Halten der mit 3 bezeichneten abgelegten Kabelschlaufe befinden sich nicht, in Bezug auf die Maschinenlängsachse 50 oder die Kabelförderrichtung f bzw. Transportrichtung t, nicht auf derselben Längsposition, sondern sie sind zueinander um einen Abstand versetzt.

Die als Fördereinrichtung zum Transportieren mehrerer Fertigungslose mit fertig konfektionierten Kabelschlaufen ausgeführte Kabelablage weist in Bezug auf die Förderrichtung in gleichmässigen Abständen hintereinander angeordnete Halteelemente 30, 31; 30', 31'; 30", 31" auf, die fest oder nur temporär mit dem Förderband oder präziser dem Fördergurt 25 des Förderbands verbunden sind.

Im hier gezeigten Ausführungsbeispiel sind in den beiden Halteelementen 30, 31 beispielhaft genau eine Kabelschlaufe gehalten. Selbstverständlich kann es auch vorteilhaft sein, wenn die Halteelemente 30, 31 mehrere Kabelschlaufen halten. Das jeweilige Halteelement 30, 31 kann somit derart ausgeführt sein, dass mehrere Kabelschlaufen eines Fertigungsloses gehalten werden können.

Bei dieser Ausführung der Kabelablage 10 werden die Lose auf dem Ablageband abgelegt, welches sich nach jedem abgelegten Los um einen bestimmten Abstand entlang der Maschinenlängsachse 50 bzw. in t-Richtung bewegt. Entsprechend sind die Halteelemente auf dem Ablageband in diesem Abstand angeordnet.

In dieser Ausführungsform der Kabelablage sind die Halteelemente 30, 31 in einem Abstand in Richtung der Maschinenlängsachse 50, die der Transportrichtung t entspricht, auf dem Förderband hintereinander angeordnet; und das Förderband wird nach dem Ablegen eines Loses um diesen Abstand bewegt. Die Halteelemente 30, 31 können fest mit dem Förderband verbunden sein oder aber trennbar, beispielsweise magnetisch, befestigt sein um die Entnahme der Lose zusammen mit den Halteelementen zu ermöglichen.

Die Entnahme der Lose erfolgt am Ende des Ablagebandes entweder durch eine Bedienperson von Hand oder durch ein automatisches System wie beispielsweise einem Roboter. Die leeren Halteelemente 30, 31 werden auf der Unterseite des Ablagebandes wieder an den Anfang des Ablagebandes zurückbewegt. Am Ende des Ablagebandes kann sich ein Sensor, beispielsweise eine Lichtschranke befinden, welche sicherstellt, dass die Schwenkmaschine 1 nur weiterproduziert, wenn das Los an der letzten Stelle entnommen wurde.

Die Halteelemente 30, 31 sind derart auf dem auf dem Fördergurt 25 des Förderbands positioniert, dass sie bzw. die von ihnen gehaltenen Kabelenden in einer Draufsicht eine V-förmige Konfiguration ausbilden.

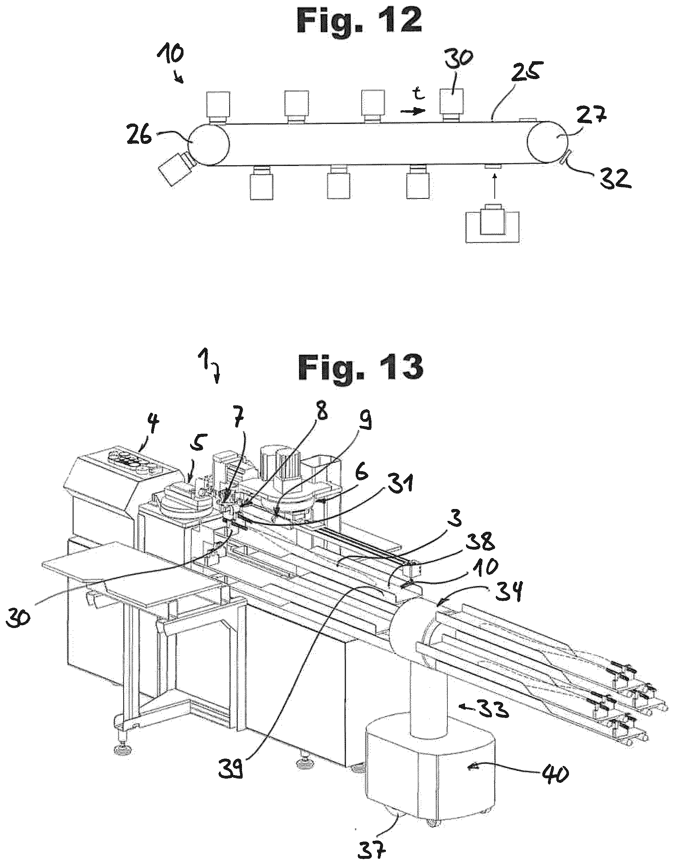

Figur 12 betrifft eine Variante bei der die Halteelemente lösbar mit der Kabelablage 10 verbunden sind. Bei Bedarf kann ein Halteelement 30 von der der hier ebenfalls als Förderband ausgeführte Kabelablage abgetrennt und zusammen mit der Kabelschlaufe zur Weiterverarbeitung transportiert werden. Auf dem Fördergurt 25 des Förderbands sind zum Vorgeben von Andockstellen Basen 32 angeordnet, von welchen Basen 32 Halteelemente 30 abtrennbar und an welche Basen Halteelemente 30 wieder anbringbar sind. Das Abtrennen der Halteelemente findet dabei vorteilhaft im Bereich des bezüglich der Transportrichtung t hinteren Ende des Förderbands an der Oberseite statt. An der Unterseite des Förderbands können das leere Halteelement 30 wieder an die jeweilige Basis 32 angedockt werden. Das Andocken ist in Figur 12 mit einem nach oben gerichteten Pfeil angedeutet. Dazu kann eine Andockeinrichtung für einen automatisierten Prozess verwendet werden. Die Halteelemente 30 können demnach nach der Entnahme der Lose wieder am Förderband fixiert werden, was durch ein automatisches Rückführsystem im rücklaufenden, unter der Auflagefläche der Lose liegenden Teil des Förderband vorgenommen werden kann. Das Andocken könnte aber auch manuell erfolgen.

Für die lösbare Verbindung der Halteelemente 30 können zum Beispiel Permanentmagnete verwendet werden. Das magnetische An- oder Aufbringen der Halteelemente 30 an die Kabelablage 10 wäre einfach in der Handhabung und besonders gut für automatisierte Prozesse geeignet. Alternativ oder zusätzlich wären aber auch mechanische Verbindungsmittel zum lösbaren Verbinden der Halteelemente 30 an die Kabelablage 10 denkbar, wobei für die automatische Entnahme insbesondere aktiv zu öffnende Verriegelungen vorteilhaft wären.

Die Kabelablage 10 könnte auch zum Beispiel durch eine Ablageplatte gebildet sein. Die Kabelablage muss somit nicht unbedingt als Fördereinrichtung zum Transportieren wenigstens eines Fertigungsloses und bevorzugt mehrerer Fertigungslose mit fertig konfektionierten Kabelschlaufen ausgeführt sein. Die Kabelablage könnte aber auch als Ganzes von der Schwenkmaschine getrennt werden. Die erfindungsgemässe Anlage 1 kann also derart ausgeführt sein, dass die Kabelablage von der Anlage entkoppelt werden kann. Eine mögliche Ausführung einer solchen Kabelablage für die Schwenkmaschine ist in Figur 13 gezeigt. Im Ausführungsbeispiel gemäss Figur 13 ist die Kabelablage 10 Bestandteil einer mobilen und mit 33 bezeichneten Kabelablageeinheit. Die mobile Kabelablageeinheit 33 ist von der Schwenkmaschine 1 abkoppelbar und kann separat von dieser an einen beliebigen Ort transportiert werden.

In dieser Ausführung der Kabelablage 10 erfolgt die Ablage eines oder mehrerer Lose jeweils auf eine Ablageplatte, welche nach der Ablage durch eine nachfolgend im Detail erläuterte Transportvorrichtung 40 entnommen wird. Die Ablageplatten verfügen ebenfalls über Halteelemente 30, 31, welche die vorgängig bereits erwähnten Funktionen erfüllen. Für den Fall, dass nur ein Los auf die Ablageplatte abgelegt wird, wäre es auch denkbar, ohne Halteelemente auszukommen.

Die mobile Kabelablageeinheit 33 weist zum Bilden eines autonomen Förderwagens eine Transportvorrichtung 40 auf, die in der Lage ist, sich autonom zu bewegen. Der Förderwagen kann mittels Rädern 37 gegenüber dem Boden bewegt werden. Der Förderwagen kann wenigstens einen Elektromotor umfassen, mit dem wenigstens eines der Räder 37 antreibbar ist.

Im vorliegenden Ausführungsbeispiel bringt die Transportvorrichtung 40 aus autonomen Förderwagen Kabellose selbstständig von der Schwenkmaschine 1 zu weiteren Verarbeitungsstationen, wie beispielsweise Verlegebretter für die Kabelbäume. Als Transportvorrichtung wären aber auch andere Transportsysteme wie Hängebahnen oder horizontale Fördersysteme mit Schienen oder Förderbändern vorstellbar.

Die mobile Kabelablageeinheit 33 ist vorliegend beispielhaft zur Aufnahme von mehreren Kabelablagen 10 eingerichtet ist. Dabei können mittels einer Wechseleinrichtung die Kabelablagen 10 in der mobile Kabelablageeinheit 33 von einer Wartestellung in eine Koppelstellung gebracht werden, in welcher Koppelstellung die jeweilige Kabelablage 10 mit der Schwenkmaschine 1 ankoppelbar ist. Zum erwähnten Wechseln der Kabelablagen kann die als Schwenkmaschine ausgeführte Anlage 1 eine mobile Kabelablageeinheit 33 mit einen Flansch 34 zum temporären Aufnehmen von mehreren Kabelablagen 10 aufweisen, welcher Flansch eine revolverartige Wechseleinrichtung aufweist, mit der Kabelablagen 10 um eine horizontale Drehachse zum Wechseln drehbar sind.

Die Kabelablage 10 der oder für die mobile Kabelablageeinheit 33 weist wenigstens in einem vorderseitigen Bereich, in dem die Kabelenden der Kabelschlaufen ablegbar sind, eine Ablageplatte 38 auf. Vorliegend ist die Kabelablage 10 ersichtlicherweise im vorderseitigen Bereich plattenförmig ausgestaltet. In einem der Vorderseite entgegengesetzten hinteren Bereich der Kabelablage ist die Kabelablage wannenförmig ausgestaltet. Seitenwandabschnittte zum Vorgeben der Wannnenform sind mit 39 bezeichnet.

Der Förderwagen 33 nimmt beidseitig mehrere Ablageplatten 38 auf, welche am drehbaren Flansch 34 befestigt sind. Durch Drehung kann nacheinander eine leere Ablageplatte in die oberste Position gebracht werden, um zu ermöglichen, dass ein Los darauf abgelegt werden kann. Ist eine Seite des Förderwagens gefüllt, fährt dieser von der Schwenkmaschine 1 weg, führt eine Drehung um 180 Grad aus und platziert die leeren Ablageplatten der anderen Seite in die Schwenkmaschine.

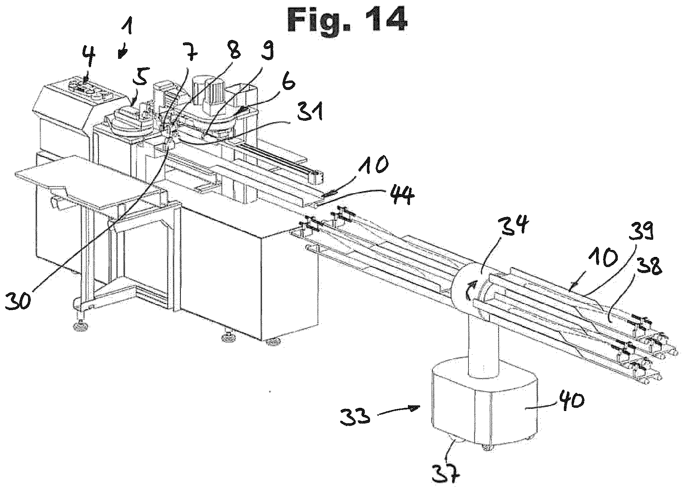

Wie aus Figur 14 hervorgeht, kann die die mobile Kabelablageeinheit 33 der Anlage 1 eine zweiseitig ausgeführte und vorliegend durch den Flansch 34 gebildete Trägereinheit aufweisen, auf welche Trägereinheit Kabelablagen 10 von zwei entgegengesetzten Seiten her temporär anbringbar sind.

In der Variante gemäss Figur 14 kann die aktuell zu bestückende Ablageplatte 10 an der Schwenkmaschine verbleiben, während der Förderwagen 40 bereits unterwegs ist, um die vollen Ablageplatten 10 abzutransportieren. Es wäre auch denkbar, dass die Schwenkmaschine 1 selbst einen (hier nicht gezeigten) Wechsler für mehrere Ablageplatten aufweist, um die Autonomie der Schwenkmaschine zu erhöhen.

Die jeweilige Kabelablage 10 kann wie folgt von der mobilen Kabelablageeinheit 33 aufgenommen werden. Aus Figur 14 ist weiterhin ein bolzenartiges Anschlussteil 44 der Kabelablage 10 erkennbar, die in eine komplementäre Aufnahme im Flansch 34 einsteckbar ist. Dazu wird bei Bedarf der Flansch 34 in Pfeilrichtung gedreht, bis eine leerer Aufnahmeposition erreicht ist und die als autonomer Förderwagen ausgeführte mobile Kabelablageeinheit 33 fährt dann zur Schwenkmaschine 1 und die Steckverbindung wird zwischen Kabelablage 10 und Trägereinheit der mobile Kabelablageeinheit 33 wird dabei erstellt. Es können mehrere solche als autonome Förderwagen ausgeführte mobile Kabelablageeinheiten 33 vorgesehen sein, die zusammen mit der wenigstens einen Schwenkmaschine 1 ein System bilden.

## Patentansprüche

1. Anlage (1) zum Konfektionieren von Kabeln mit wenigstens einer ersten Schwenkeinheit (5) und wenigstens einer Bearbeitungsstation (21, ) zum Bearbeiten von Kabelenden des Kabels und einen Schlaufenleger (7) zum Bilden von Kabelschlaufen (3) aus dem Kabel (2), **dadurch gekennzeichnet, dass**
die Anlage einen Schlaufenstrecker (8) und/oder einen durch einen Greifer (20) gebildeten Schlaufenhalter (9) zum Sichern der Kabelschlaufe (3) umfasst.

2. Anlage (1) nach Anspruch 1, **dadurch gekennzeichnet, dass** der Schlaufenstrecker (8) einen mittels eines Antriebs linear verfahrbaren Mitnehmer (17) aufweist.

3. Anlage (1) nach Anspruch 2, **dadurch gekennzeichnet, dass** die Anlage (1) den Schlaufenstrecker (8) mit dem verfahrbaren Mitnehmer (17) und einen durch einen Greifer (20) gebildeten Schlaufenhalter (9) aufweist.

4. Anlage (1) nach einem der Ansprüche 1 bis 3, wobei die Anlage eine zweite Schwenkeinheit (6) und eine Kabelablage (10) zum wenigstens temporären Aufnehmen eines Loses von fertig konfektionierten Kabelschlaufen (3) aufweist, **dadurch gekennzeichnet, dass** der Schlaufenleger (7) und die zweite Schwenkeinheit (6) derart ausgeführt sind, dass die fertig konfektionierte Kabelschlaufe (3) mittels der jeweiligen Kabelgreifer (15, 19) des Schlaufenlegers (7) einerseits und der zweiten Schwenkeinheit (6) andererseits auf die Kabelablage (10) legbar ist.

5. Anlage (1) nach einem der Ansprüche 1 bis 4, wobei die Anlage eine Kabelablage (10) zum wenigstens temporären Aufnehmen eines Loses von fertig konfektionierten Kabelschlaufen (3) aufweist, **dadurch gekennzeichnet, dass** die Kabelablage (10) wenigstens ein Halteelement (30, 31) zum Halten einer abgelegten Kabelschlaufe (3) im Bereich eines Kabelendes und vorzugsweise zwei Halteelemente (30, 31) zum Halten beider Kabelenden der Kabelschlaufe (3) umfasst.

6. Anlage (1) nach Anspruch 5, **dadurch gekennzeichnet, dass** das wenigstens eine Halteelement (10) derart ausgeführt ist, dass mehrere Kabelschlaufen (3) eines Fertigungsloses gehalten werden können.

7. Anlage (1) nach Anspruch 5 oder 6, **dadurch gekennzeichnet, dass** das wenigstens eine Halteelement (30, 31) lösbar mit der Kabelablage (10) verbunden ist.

8. Anlage (1) nach einem der Ansprüche 4 bis 7, **dadurch gekennzeichnet, dass** die Kabelablage (10) als Fördereinrichtung zum Transportieren wenigstens eines Fertigungsloses und bevorzugt mehrerer Fertigungslose mit fertig konfektionierten Kabelschlaufen (3, 3') ausgeführt ist.

9. Anlage (1) nach Anspruch 8, **dadurch gekennzeichnet, dass** die Kabelablage (10) als Förderband ausgeführt ist.

10. Anlage (1) nach Anspruch 9, **dadurch gekennzeichnet, dass** auf einem Fördergurt (25) des Förderbands zum Vorgeben von Andockstellen Basen (32) angeordnet sind, von welchen Basen (32) Halteelemente (30) abtrennbar und an welche Basen Halteelemente (30) anbringbar sind.

11. Anlage (1) nach Anspruch 9 oder 10, **dadurch gekennzeichnet, dass** je Fertigungslos zwei Halteelemente (30, 31) vorgesehen sind, wobei die jeweiligen Halteelemente (30, 31) randseitig auf dem Fördergurt (25) des Förderbands positioniert sind.

12. Anlage (1) nach einem der Ansprüche 9 bis 11, **dadurch gekennzeichnet, dass** die Halteelemente (30, 31) derart auf dem auf dem Fördergurt (25) des Förderbands positioniert sind, dass sie bzw. die von ihnen gehaltenen Kabelenden in einer Draufsicht eine V-förmige Konfiguration ausbilden.

13. Anlage (1) nach einem der Ansprüche 4 bis 7, **dadurch gekennzeichnet, dass** die Kabelablage (10) als mobile Kabelablageeinheit ausgeführt ist oder Bestandteil einer mobilen Kabelablageeinheit (33) ist, wodurch die mobile Kabelablageeinheit (33) von der Anlage (1) abkoppelbar und mittels einer Transportvorrichtung (40) transportierbar ist.

14. Anlage (1) nach Anspruch 13, **dadurch gekennzeichnet, dass** die mobile Kabelablageeinheit (33) zur Aufnahme von mehreren Kabelablagen (10) eingerichtet ist, wobei mittels einer Wechseleinrichtung die Kabelablagen (10) von einer Wartestellung in eine Koppelstellung gebracht werden können, in welcher Koppelstellung die jeweilige Kabelablage (10) mit der Anlage (1) ankoppelbar ist.

15. Anlage (1) nach Anspruch 14, **dadurch gekennzeichnet, dass** die mobile Kabelablageeinheit (33) einen Flansch (34) zum temporären Aufnehmen von mehreren Kabelablagen (10) aufweist, der eine revolverartige Wechseleinrichtung aufweist, mit der Kabelablagen (10) um eine horizontale Drehachse zum Wechseln drehbar sind.

16. Anlage (1) einem der Ansprüche 13 bis 15, **dadurch gekennzeichnet, dass** die Kabelablage (10) einer mobilen Kabelablageeinheit (33) wenigstens in einem vorderseitigen Bereich, in dem Kabelenden der Kabelschlaufen ablegbar sind, vorzugsweise ein Bereich, in dem das wenigstens eine Halteelement (30, 31) vorgesehen sind, eine Ablageplatte (38) aufweist.
